# EUROPÄISCHE PATENTSCHRIFT

(11) **EP 1 531 094 B1**
(45) Veröffentlichungstag und Bekanntmachung des Hinweises auf die Patenterteilung: **22.11.2006**
(21) Anmeldenummer: 04025343.7
(22) Anmeldetag: 25.10.2004
(51) Int. Cl.: B60R 21/16, B60R 21/20

(54) **Airbagmodul**
Airbag module
Module d'airbag

(30) Priorität: 14.11.2003 DE 20317611 U
(43) Veröffentlichungstag der Anmeldung: 18.05.2005
(73) Patentinhaber: TRW Automotive Safety Systems GmbH, 63743 Aschaffenburg (DE)
(72) Erfinder: Schneider, Michael, Dr., 63834 Sulzbach (DE); Magoley, Marcus, Dr., 63739 Aschaffenburg (DE)
(74) Vertreter: Kitzhofer, Thomas

(56) Entgegenhaltungen:
- EP-A- 0 364 267
- US-A- 5 152 549
- US-A- 5 368 327
- US-A- 5 518 266
- US-B1- 6 250 665
- US-B1- 6 371 507

## Beschreibung

Die Erfindung betrifft ein Gassackmodul mit einem Trägerteil, einem Gassack mit einer von einem Rand umgebenen Einblasöffnung, einem Gassackhalteelement, wobei der Rand der Einblasöffnung zwischen dem Gassackhalteelement und dem Trägerteil angeordnet ist, und mit wenigstens einem am Rand der Einblasöffnung vorgesehenen, mit dem Gassack gekoppelten Fixierelement. Ein derartiges Gassackmodul ist aus der EP 0364267 A gemäß Oberbegriff des Anspruchs 1 bekannt.

Durch ein derartiges Fixierelement wird die Befestigung des Gassacks an einem Trägerteil, welches z.B. Teil eines Modulgehäuses sein kann, verbessert, vor allem bei einer auf den Gassack wirkenden Belastung, z.B. beim Entfalten des Gassacks oder beim Auftreffen eines Fahrzeuginsassen auf den Gassack. In beiden Fällen ist es entscheidend, daß der Rand der Einblasöffnung sicher und möglichst gasdicht am Trägerteil befestigt bleibt.

Der Erfindung stellt sich die Aufgabe, die Fixierung des Gassacks am Trägerteil zu optimieren.

Dies wird bei einem oben genannten Gassackmodul erreicht, indem das Fixierelement in einem radialen Schnitt gesehen zumindest abschnittsweise keil- oder trapezförmig und so zum Gassackhalteelement und zum Trägerteil angeordnet ist, daß das Fixierelement bei einer Belastung des Gassacks bestrebt ist, durch eine Bewegung zwischen Trägerteil und Gassackhalteelement aufgrund einer Keilwirkung diese voneinander zu entfernen. Durch diese Gestaltung kann sich das Fixierelement gegebenenfalls um eine kleine Wegstrecke radial nach außen bewegen, wenn eine Belastung auf den Gassack wirkt, wobei sich graduell die auf den Gassack durch das Halteelement und das Trägerteil ausgeübte Klemmwirkung verstärkt. Der Gassack wird also nicht ruckartig abgebremst, so daß die Maximalkräfte, die auf den Rand der Einblasöffnung wirken, gegenüber einer bekannten Gassackbefestigung reduziert werden. Außerdem erfolgt durch wenigstens eine am keil- oder trapezförmigen Abschnitt ausgebildete, bezogen auf die Achse des Gassackmoduls geneigte Klemmfläche eine Umlenkung der Kräfte in die axiale Richtung, so daß ein Teil der Belastungskräfte von einer Befestigungsvorrichtung des Gassackhalteelements am Trägerteil, z.B. einer bekannten Schraubenverbindung, aufgenommen werden kann. Da die Klemmwirkung proportional zu der auf den Gassack wirkenden Kraft zunimmt, wenn sich das Fixierelement zwischen Gassackhalteelement und Trägerteil schiebt, erhöht sich automatisch die auf den Rand der Einblasöffnung wirkende Klemmkraft. Daher ist die Höhe einer Vorspannung, die über die bereits erwähnten Befestigungsmittel auf den Rand der Einblasöffnung ausgeübt wird, nicht mehr allein für die Fixierung des Gassacks im Belastungsfall verantwortlich.

Das Fixierelement kann bei einer Belastung des Gassacks z.B. zwischen dem Trägerteil und dem Gassackhalteelement geklemmt sein und schließlich unverschieblich positioniert werden.

Es ist möglich, ein ringförmiges Fixierelement einzusetzen, das die Einblasöffnung vollständig umgibt. Es können jedoch alternativ auch mehrere, z.B. vier oder fünf, voneinander separate Fixierelemente vorgesehen sein, die an über den Umfang der Einblasöffnung verteilten Stellen angeordnet sind. In diesem Fall können die Fixierelemente als Ringsegment gestaltet sein, um eine gleichmäßige Klemmwirkung zu erzielen. Das Fixierelement könnte auch als geschlitzter Ring ausgebildet sein.

Unter "ringförmig" sind hier nicht nur kreisringförmige Bauteile, sondern allgemein auch andere Formen mit einer innen liegenden Ausnehmung zu verstehen.

Um eine gezielte Klemmwirkung zu erreichen, ist es von Vorteil, wenn das Fixierelement formstabil ist, sich also bei der Klemmung nicht oder nur unwesentlich verformt. Der keil- oder trapezförmige Abschnitt soll diese Form auch in einem unbelasteten Zustand aufweisen und diese nicht erst während eines Klemmvorgangs annehmen.

Vorzugsweise ist das Fixierelement ein separates Bauteil und nicht einstückig z.B. mit dem Gassack oder dem Gassackhalteelement ausgeführt.

Das Fixierelement kann in den Rand der Einblasöffnung eingebettet sein, z.B. durch Einnähen oder Einweben. Das Fixierelement läßt sich mit dem Gassack auch durch Kleben verbinden, entweder als ausschließliche Befestigung oder zusätzlich zum Einnähen oder Einweben.

Es ist auch möglich, die Kopplung des Fixierelements mit dem Gassack dadurch vorzunehmen, daß eine zum Rand der Einblasöffnung gerichtete Seite des Fixierelements aufgerauht oder geeignet strukturiert ist, um die Reibung zwischen Fixierelement und Gassackgewebe zu erhöhen. In diesem Fall kann auf eine weitere Befestigung verzichtet werden.

In einer bevorzugten Ausführungsform der Erfindung weisen das Gassackhalteelement und/oder das Trägerteil im Bereich des Randes der Einblasöffnung eine der Schräge des Fixierelements entsprechende Kontur auf. So wird bei einer Belastung des Gassacks zum einen eine sehr gleichmäßige Klemmung und zum anderen eine gleichmäßig ansteigende Belastung des Randes der Einblasöffnung erreicht. Es ist hierbei unwesentlich, ob die geneigte Klemmfläche auf der zum Gassackhalteelement, der zum Trägerteil gerichteten oder auf beiden Seiten des Fixierelements ausgebildet ist. Wichtig ist hier, daß die Kontur eines zwischen Trägerteil und Gassackelement gebildeten Aufnahmeraums, in dem das Fixierelement angeordnet ist, der äußeren Kontur des Fixierelements entspricht. So ergibt sich bei einer Belastung des Gassacks und einer daraus resultierenden radial nach außen gerichteten Bewegung des Fixierelements eine gleichmäßige Klemmwirkung zwischen der oder den Klemmflächen und der Innenseite des Aufnahmeraums und darüber eine gleichmäßig verteilte und gleichmäßig ansteigende Kraft auf den Rand der Einblasöffnung.

Der Gassack kann in einem an den Rand der Einblasöffnung angrenzenden Bereich zwischen Gassackhalteelement und Trägerteil geklemmt sein, um unabhängig von einer Belastung des Gassacks dessen Fixierung am Trägerteil zu gewährleisten.

Das Gassackhalteelement kann ferner ein separater Gassackhaltering sein, es kann aber auch an einem Flansch eines Gasgenerators oder an einem anderen geeigneten Bauteil ausgebildet sein. Das Trägerteil des Gassackmoduls wird üblicherweise durch einen Generatorträger, ein Gehäuse oder ein anderes Bauteil des Gassackmoduls gebildet, das letztendlich mit einem fahrzeugfesten Bauteil, z.B. einem Lenkrad verbunden ist.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische halbseitige Schnittansicht eines erfindungsgemäßen Gassackmoduls;
- Figur 2 einen vergrößerten Ausschnitt aus Figur 1;
- Figur 3 einen vergrößerten Ausschnitt aus Figur 2 gemäß einer ersten Variante eines erfindungsgemäßen Gassackmoduls;
- Figuren 3a bis 3c verschiedene Ausbildungen eines Fixierelements eines erfindungsgemäßen Gassackmoduls;
- Figur 4 einen vergrößerten Ausschnitt aus Figur 2 gemäß einer zweiten Variante eines erfindungsgemäßen Gassackmoduls; und
- Figur 5 bis Figur 10 weitere Möglichkeiten zur Befestigung eines Gassacks an einem Trägerteil.

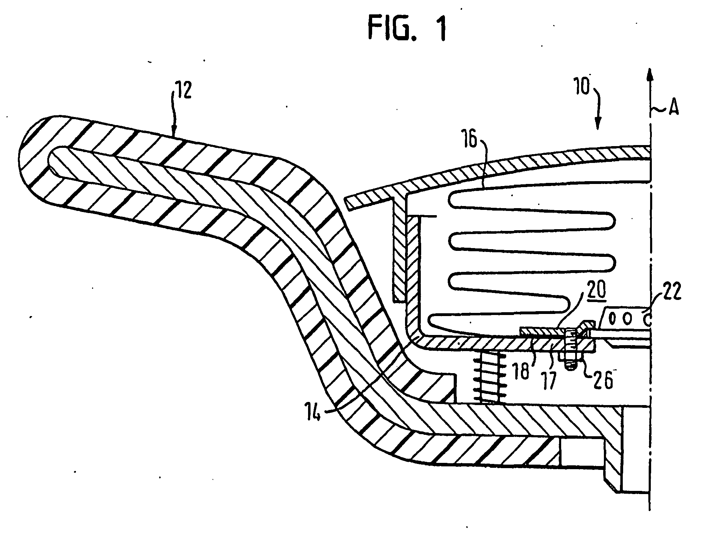

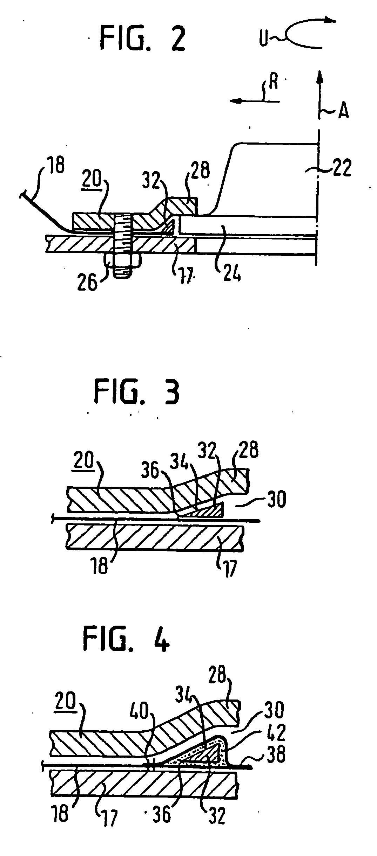

Figur 1 zeigt ein Gassackmodul 10, das in ein Lenkrad 12 eingesetzt ist. Das Gassackmodul 10 enthält einen in einem napfförmigen Trägerteil 14 aufgenommenen, gefalteten Gassack 16. Ein Rand 18 einer Einblasöffnung des Gassacks 16 liegt zwischen einem Boden 17 des Trägerteils 14 und einem separaten, ringförmigen Gassackhalteelement 20. Der Boden 17 des Trägerteils 14 weist eine Öffnung auf, in die ein Gasgenerator 22 mit einem ringförmigen Flansch 24 eingesetzt ist (siehe auch Figur 2), der ebenfalls zwischen dem Gassackhalteelement 20 und dem Boden 17 des Trägerteils 14 angeordnet ist.

Im Gassackhalteelement 20, im Rand 18 der Einblasöffnung des Gassacks 16 sowie im Boden 17 des Trägerteils 14 sind jeweils Öffnungen vorgesehen, durch die als Schrauben-Muttern-Verbindung ausgebildete Befestigungsmittel 26 hindurchragen, die diese Teile fest miteinander verbinden.

Ein in Radialrichtung R innenliegender Randbereich 28 des Gassackhalteelements 20 ist in einer Axialrichtung A des Gassackmoduls 10 aufwärts gebogen, so daß der Flansch 24 des Gasgenerators 22 davon erfaßt und darunter geklemmt werden kann.

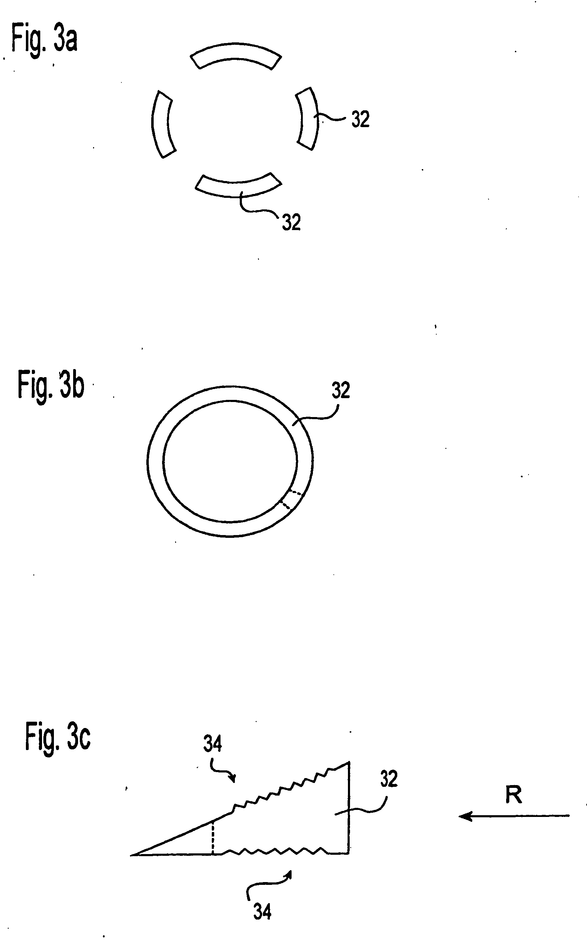

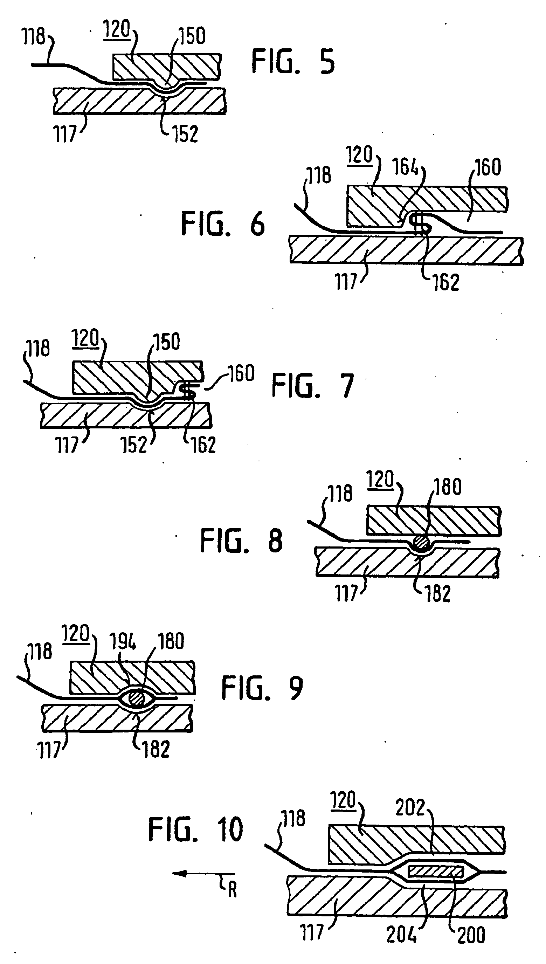

Zwischen dem Randbereich 28 des Gassackhalteelements 20 und dem Boden 17 des Trägerteils 14 ist ein Aufnahmeraum 30 gebildet (siehe Figuren 3 und 4), in dem ein Fixierelement 32 angeordnet ist. Das Fixierelement 32 ist mit dem Rand 18 der Einblasöffnung des Gassacks 16 gekoppelt.

Im hier gezeigten Fall sind in Umfangsrichtung U an bestimmten Stellen mehrere voneinander separate Fixierelemente 32 angeordnet (siehe Figur 3a). Es wäre aber auch möglich, ein einziges ringförmiges, eventuell in Radialrichtung R geschlitztes Fixierelement 32 vorzusehen (siehe Figur 3b).

Jedes Fixierelement 32 ist ein separates, z.B. aus Kunststoff oder Metall bestehendes, formstabiles Bauteil.

Das Fixierelement 32 läuft in Radialrichtung R keilförmig zu und weist eine Klemmfläche 34 auf, die in einem Schnitt in Radialrichtung R gesehen und bezüglich der Axialrichtung A radial nach außen geneigt ist, so daß die Spitze 36 des Keils radial nach außen zeigt.

Wie in den Figuren 2 bis 4 zu erkennen, ist die Kontur des Bodens 17 des Trägerteils 14 sowie des Gassackhalteelements 20 im Bereich des Aufnahmeraums 30 auf die Kontur des Fixierelements 32 und insbesondere auf die Neigung der Klemmfläche 34 abgestimmt.

Bei einer Belastung des Gassacks 16, z.B. bei dessen Entfaltung bei der Aktivierung des Gassackmoduls 10 oder beim Auftreffen eines Fahrzeuginsassen auf den aufgeblasenen Gassack 16, wird der Rand 18 der Einblasöffnung zumindest an manchen Stellen seines Umfangs radial nach außen belastet. Diese Belastung wird auf das Fixierelement 32 übertragen, so daß sich dieses ebenfalls radial nach außen bewegt. Hierbei gelangt der keilförmige Abschnitt des Fixierelements 32 mit der Klemmfläche 34 in Anlage an die Innenseite des Aufnahmeraums 30, in diesem Fall an die zum Trägerteil 14 zeigende Innenseite des Randbereichs 28 des Gassackhalteelements 20. Durch die aufeinander abgestimmten Konturen schiebt sich das Fixierelement 32 gleichmäßig und kontinuierlich zwischen das Gassackhalteelement 20 und das Trägerteil 14 und bewegt diese Bauteile in Axialrichtung A auseinander. Hierbei ergibt sich eine gleichmäßige Klemmkraft zwischen dem Gassackhalteelement 20, dem Trägerteil 14, dem Rand 18 der Einblasöffnung sowie dem Fixierelement 32, über die der Gassack 16 sicher am Trägerteil befestigt wird. Erhöht sich die Belastung auf den Gassack 16, so wird die Klemmkraft gleichmäßig und ohne ruckhafte Bewegungen verstärkt, da das Fixierelement 32 in den sich radial nach außen verjüngenden Aufnahmeraum 30 gezogen wird. Hieraus resultiert eine sehr gleichmäßige Belastung zur Fixierung des Randes 18 des Gassacks 16.

Bei der in Figur 3 gezeigten Variante liegt das Fixierelement 32 auf dem Rand 18 der Einblasöffnung auf und ist mit dem Rand 18 des Gassacks 16 gekoppelt, indem die zum Rand 18 gerichtete Seite des Fixierelements 32 aufgerauht oder geeignet strukturiert ist, um eine hohe Reibung mit dem Gewebe des Gassacks 16 zu erzielen (schematisch in Figur 3c gezeigt).

Alternativ ist in Figur 4 gezeigt, das Fixierelement 32 in den Rand 18 der Einblasöffnung des Gassacks 16 einzuweben (siehe Bezugszeichen 38) oder im Rand 18 des Gassacks 16 mit Nähten 40 zu vernähen.

Das Fixierelement 32 kann auch mittels eines Klebstoffs 42 mit dem Rand 18 der Einblasöffnung verbunden sein. Eine Verklebung kann entweder zusätzlich zu einer anderen Befestigungsmethode eingesetzt werden oder als ausschließliche Befestigungsmethode des Fixierelements 32 am Gassack 16 dienen.

In den in den Figuren 3 und 4 gezeigten Ausführungsformen ist das Fixierelement 32 in sich starr und so formstabil, daß es sich bei einer Belastung des Gassacks 16 nicht oder nur unwesentlich verformt. Der keilförmige Abschnitt hat diese Form auch ohne eine Belastung des Gassacks 16.

Im hier gezeigten Beispiel weist das Fixierelement nur an einer Seite eine geneigte Klemmfläche 34 auf. Es ist natürlich genauso denkbar, auch an der axial gegenüberliegenden Seite des Fixierelements 32 eine weitere Klemmfläche auszubilden, oder aber die Klemmfläche nur an der zum Boden 17 des Trägerteils 14 gerichteten Seite des Fixierelements 32 auszubilden. Die Spitze 36 des Fixierelements 32 kann auch schräg zur Axialrichtung A ausgerichtet sein. In diesem Fall muß natürlich die Kontur des Aufnahmeraums 30 entsprechend angepaßt sein.

Es wäre auch denkbar, ein Fixierelement 32 mit einem trapezförmigen Querschnitt (siehe Figur 3c) zu verwenden oder eine Klemmfläche 34 mit einer nichtlinearen, z.B. konvexen oder konkaven Neigung einzusetzen. Genauso kann sowohl in Radialrichtung r als auch in Umfangsrichtung U nur ein Abschnitt des Fixierelements 32 keil- oder trapezförmig ausgebildet sein.

In den Figuren 5 bis 10 sind weitere Möglichkeiten gezeigt, einen Rand 118 einer Einblasöffnung eines Gassacks zwischen zwei Bauteilen, z.B. einem Trägerteil 117 und einem Gassackhalteelement 120 zu befestigen.

In dem in Figur 5 gezeigten Beispiel weist das Gassackhalteelement 120 einen Vorsprung 150 auf, während im Trägerteil 117 eine dem Vorsprung 150 entsprechende Nut 152 ausgebildet ist. Bei Belastung des Randes 118 des Gassacks resultiert so eine Klemmung des Randes 118 der Einblasöffnung des Gassacks im Bereich des Vorsprungs 150 und der Nut 152.

Bei dem in Figur 6 gezeigten Beispiel ist im Gassackhalteelement 120 eine Ausnehmung 160 vorgesehen, die einen Aufnahmeraum für eine durch Nähte 162 gebildete Verdickung im Rand 118 der Einblasöffnung darstellt. Bei Belastung auf den Rand 118 wird die Verdickung radial nach außen gezogen und an der schräg verlaufenden Innenwand 164 der Ausnehmung 160 geklemmt.

Das in Figur 7 gezeigte Beispiel kombiniert die Fixiermethoden aus den Figuren 5 und 6. Hier folgt im Gassackhalteelement 120 radial nach innen gesehen eine Ausnehmung 160 zur Aufnahme einer durch Nähte 162 gebildeten Verdikkung auf einen Vorsprung 150. Im Trägerteil 117 ist eine dem Vorsprung 150 entsprechende Nut 152 ausgebildet.

Bei dem in Figur 8 gezeigten Beispiel ist ein von den anderen gezeigten Bauteilen separates Fixierelement 180 mit einem kreisförmigen Querschnitt vorgesehen, das in einer Nut 182 im Trägerteil 117 liegt. Der Rand 118 der Einblasöffnung verläuft zwischen dem Fixierelement 180 und dem Trägerteil 117. Bei einer Zugbelastung in Radialrichtung R auf den Rand 118 resultiert eine Klemmwirkung zwischen dem Trägerteil 117 und dem Fixierelement 180.

Das in Figur 9 gezeigte Beispiel entspricht im wesentlichen dem Beispiel aus Figur 8, mit dem Unterschied, daß auch im Gassackhalteelement 120 eine in der Kontur dem Querschnitt des Fixierelements 180 entsprechende Ausnehmung 194 vorgesehen ist.

Das in Figur 10 gezeigte Beispiel entspricht im wesentlichen dem in Figur 9 gezeigten Beispiel, mit dem Unterschied, daß das Fixierelement 200 einen rechteckigen Querschnitt hat und daß die Ausnehmungen 202, 204 im Gassackhalteelement 120 bzw. Trägerteil 117 nur an der radial nach außen gerichteten Seite abgeschrägt sind und aufeinander zu verlaufen, während ihr Abstand auf der radial innenliegenden Seite vergrößert bleibt.

Die gezeigte Radialrichtung R bezieht sich auf alle Figuren 5 bis 10.

In allen in den Figuren 5 bis 10 gezeigten Beispielen wird die Klemmwirkung auf den Rand 118 der Einblasöffnung des Gassacks, die vom Trägerteil 117 und dem Gassackhalteelement 120 ausgeübt wird, durch eine geeignete Form dieser beiden Bauteile, des Randes 118 des Gassacks oder eines zusätzlichen separaten Fixierelements 180, 200, verstärkt.

Es wäre auch möglich, eine oder mehrere der in den Figuren 5 bis 10 gezeigten Befestigungsmethoden mit der in den Figuren 1 bis 4 dargestellten Gassackbefestigung zu kombinieren.

Natürlich sind auch die Elemente der verschiedenen Varianten im Ermessen des Fachmanns nach Belieben kombinierbar, sofern die Kombination unter den Rahmen der Ansprüche fällt.

## Patentansprüche

1. Gassackmodul
mit einem Trägerteil (14),
einem Gassack (16) mit einer von einem Rand (18) umgebenen Einblasöffnung,
einem Gassackhalteelement (20),
wobei der Rand (18) der Einblasöffnung zwischen dem Gassackhalteelement (20) und dem Trägerteil (14) angeordnet ist, und mit
wenigstens einem am Rand (18) der Einblasöffnung vorgesehenen, mit dem Gassack (16) gekoppelten Fixierelement (32),
**dadurch gekennzeichnet, daß** das Fixierelement (32) in einem radialen Schnitt gesehen zumindest abschnittsweise keil- oder trapezförmig und so zum Gassackhalteelement (20) und zum Trägerteil (14) angeordnet ist, daß das Fixierelement (32) bei einer Belastung des Gassacks (16) bestrebt ist, durch eine Bewegung zwischen Trägerteil (14) und Gassackhalteelement (20) aufgrund einer Keilwirkung diese voneinander zu entfernen.

2. Gassackmodul nach Anspruch 1, **dadurch gekennzeichnet, daß** das Fixierelement (32) bei einer Belastung des Gassacks (16) zwischen dem Trägerteil (14) und dem Gassackhalteelement (20) geklemmt ist.

3. Gassackmodul nach einem der vorhergehenden Ansprüche, **dadurch gekennzeichnet daß** das Fixierelement (32) ringförmig ist.

4. Gassackmodul nach einem der vorhergehenden Ansprüche, **dadurch gekennzeichnet, daß** das Fixierelement (32) formstabil ist.

5. Gassackmodul nach einem der vorhergehenden Ansprüche, **dadurch gekennzeichnet, daß** das Fixierelement (32) ein separates Bauteil ist.

6. Gassackmodul nach einem der vorhergehenden Ansprüche, **dadurch gekennzeichnet, daß** das Fixierelement (32) in den Rand (18) der Einblasöffnung eingebettet ist.

7. Gassackmodul nach einem der vorhergehenden Ansprüche, **dadurch gekennzeichnet, daß** das Fixierelement (32) in den Rand (18) der Einblasöffnung eingewebt oder eingenäht ist.

8. Gassackmodul nach einem der vorhergehenden Ansprüche, **dadurch gekennzeichnet, daß** das Fixierelement (32) mit dem Rand (18) der Einblasöffnung durch Kleben verbunden ist.

9. Gassackmodul nach einem der vorhergehenden Ansprüche, **dadurch gekennzeichnet, daß** das Gassackhalteelement (20) und/oder das Trägerteil (14) im Bereich des Randes (18) der Einblasöffnung eine der Schräge des Fixierelements (32) entsprechende Kontur aufweisen.

10. Gassackmodul nach einem der vorhergehenden Ansprüche, **dadurch gekennzeichnet, daß** der Gassack (16) in einem an den Rand (18) der Einblasöffnung angrenzenden Bereich zwischen Gassackhalteelement (20) und Trägerteil (14) geklemmt ist.

## Claims

1. A gas bag module comprising
a carrier part (14),
a gas bag (16) having an inflation opening that is surrounded by a rim (18),
a gas bag retainer element (20),
the rim (18) of the inflation opening being arranged between the gas bag retainer element (20) and the carrier part (14), and
at least one fixing element (32) that is provided at the rim (18) of the inflation opening and is coupled to the gas bag (16),
**characterized in that** the fixing element (32), as viewed in a radial sectional view, is at least partially wedge-shaped or trapezoidal and is arranged in relation to the gas bag retainer element (20) and to the carrier part (14) such that upon a stress on the gas bag (16), the fixing element (32) seeks to move the carrier part (14) and the gas bag retainer element (20) away from each other by a motion between them, due to a wedge effect.

2. The gas bag module according to Claim 1, **characterized in that** upon a stress on the gas bag (16), the fixing element (32) is clamped between the carrier part (14) and the gas bag retainer element (20).

3. The gas bag module according to either of the preceding claims, **characterized in that** the fixing element (32) is annular.

4. The gas bag module according to any of the preceding claims, **characterized in that** the fixing element (32) is dimensionally stable.

5. The gas bag module according to any of the preceding claims, **characterized in that** the fixing element (32) is a separate component.

6. The gas bag module according to any of the preceding claims, **characterized in that** the fixing element (32) is embedded in the rim (18) of the inflation opening.

7. The gas bag module according to any of the preceding claims, **characterized in that** the fixing element (32) is woven or sewn into the rim (18) of the inflation opening.

8. The gas bag module according to any of the preceding claims, **characterized in that** the fixing element (32) is joined to the rim (18) of the inflation opening by bonding.

9. The gas bag module according to any of the preceding claims, **characterized in that** in the area of the rim (18) of the inflation opening, the gas bag retainer element (20) and/or the carrier part (14) have a contour that corresponds to the slope of the fixing element (32).

10. The gas bag module according to any of the preceding claims, **characterized in that** in an area adjacent to the rim (18) of the inflation opening, the gas bag (16) is clamped between the gas bag retainer element (20) and the carrier part (14).

## Revendications

1. Module de coussin à gaz, comportant
une partie de support (14),
un coussin à gaz (16) avec un orifice d'insufflation entouré par un bord (18),
un élément de maintien de coussin à gaz (20),
le bord (18) de l'orifice d'insufflation étant agencé entre l'élément de maintien de coussin à gaz (20) et la partie de support (14), et comportant
au moins un élément de fixation (32) prévu sur le bord (18) de l'orifice d'insufflation et accouplé au coussin à gaz (16),
**caractérisé en ce que** vu en coupe radiale, l'élément de fixation (32) est au moins par portion en forme de coin ou en forme de trapèze et est agencé par rapport à l'élément de maintien de coussin à gaz (20) et par rapport à la partie de support (14) de telle sorte qu'en cas de sollicitation du coussin à gaz (16), l'élément de fixation (32) tend à éloigner l'une de l'autre la partie de support (14) et l'élément de maintien de coussin à gaz (20) par un mouvement entre ceux-ci dû à un effet de cale.

2. Module de coussin à gaz selon la revendication 1, **caractérisé en ce qu'**en cas de sollicitation du coussin à gaz (16), l'élément de fixation (32) est serré entre la partie de support (14) et l'élément de maintien de coussin à gaz (20).

3. Module de coussin à gaz selon l'une des revendications précédentes, **caractérisé en ce que** l'élément de fixation (32) est de forme annulaire.

4. Module de coussin à gaz selon l'une des revendications précédentes, **caractérisé en ce que** l'élément de fixation (32) est indéformable.

5. Module de coussin à gaz selon l'une des revendications précédentes, **caractérisé en ce que** l'élément de fixation (32) est un composant séparé.

6. Module de coussin à gaz selon l'une des revendications précédentes, **caractérisé en ce que** l'élément de fixation (32) est noyé dans le bord (18) de l'orifice d'insufflation.

7. Module de coussin à gaz selon l'une des revendications précédentes, **caractérisé en ce que** l'élément de fixation (32) est tissé ou cousu dans le bord (18) de l'orifice d'insufflation.

8. Module de coussin à gaz selon l'une des revendications précédentes, **caractérisé en ce que** l'élément de fixation (32) est relié par collage au bord (18) de l'orifice d'insufflation.

9. Module de coussin à gaz selon l'une des revendications précédentes, **caractérisé en ce que** l'élément de maintien de coussin à gaz (20) et/ou la partie de support (14) présentent, dans la région du bord (18) de l'orifice d'insufflation, un contour correspondant à l'inclinaison de l'élément de fixation (32).

10. Module de coussin à gaz selon l'une des revendications précédentes, **caractérisé en ce que** le coussin à gaz (16) est serré dans une région adjacente au bord (18) de l'orifice d'insufflation, entre l'élément de maintien de coussin à gaz (20) et la partie de support (14).
